# EUROPÄISCHE PATENTSCHRIFT

(11) **EP 2 536 898 B1**
(45) Veröffentlichungstag und Bekanntmachung des Hinweises auf die Patenterteilung: **25.10.2017**
(21) Anmeldenummer: 11707557.2
(22) Anmeldetag: 17.02.2011
(51) Int. Cl.: E04G 11/04, E04G 21/06, E04B 1/16

(54) **VERFAHREN UND ANORDNUNG ZUR HERSTELLUNG VON GEKRÜMMTEN UND/ODER GEWÖLBTEN BAUTEILEN**
METHOD AND ARRANGEMENT FOR PRODUCING CURVED AND/OR DOMED COMPONENTS
PROCÉDÉ ET DISPOSITIF DE FABRICATION D'ÉLÉMENTS COURBÉS ET/OU ARQUÉS

(30) Priorität: 17.02.2010 AT 2462010
(43) Veröffentlichungstag der Anmeldung: 26.12.2012
(73) Patentinhaber: Organoid Technologies GmbH, 6473 Wenns (AT)
(72) Erfinder: JEHART, Martin, A-6473 Wenns (AT)
(74) Vertreter: Wildhack & Jellinek
(86) Internationale Anmeldenummer: PCT/AT2011/000080
(87) Internationale Veröffentlichungsnummer: WO 2011/100773

(56) Entgegenhaltungen:
- EP-A2- 1 512 804
- WO-A1-95/12727
- DE-A1- 3 442 904

## Beschreibung

Die Erfindung betrifft ein neues Verfahren zur Herstellung von *einfach oder zweifach gekrümmte, insbesondere zylinder- und*/*oder kuppelartig gekrümmte und*/*oder gewölbte und*/*oder freie Gestalt aufweisenden platten- und*/*oder schalenartigen Bauteilen, wobei ein im Wesentlichen schlammartig pastöse Konsistenz aufweisendes aushärtbares Rohmaterial auf Basis eines Gemisches zumindest eines Bindemittels mit faserartigen Bestandteilen auf eine der jeweiligen Gestalt der Bauteile entsprechend ausgebildete Außenfläche einer Innenform aus einem zumindest von dem genannten Rohmaterial im Wesentlichen nicht durchdringbaren Material aufgebracht und dort aushärten gelassen wird.*

Die Erfindung liegt auf dem Gebiet der Konstruktions- bzw. Bautechnik und befasst sich mit der Herstellung von gekrümmten Bauteilen, Formelementen und Freiformen. Gerade in jüngster Zeit werden derartige organisch anmutende, geschwungene bzw. gewölbte Formelemente bei der äußeren Verschalung oder Gestaltung von repräsentativen Gebäuden, Gebäudeteilen oder bei anderen Konstruktionen gerne eingesetzt, da derartig organisch gekrümmte Formen eine natürliche Schönheit und Eleganz ausstrahlen. Allerdings ist das Erstellen von räumlich gekrümmten Schalungsformen konstruktiv aufwändiger und teurer als die Verwendung von geraden Elementen bzw. die Errichtung von herkömmlichen quaderförmigen Gebäuden.

Aus dem Stand der Technik sind diverse Verfahren bekannt, mit denen gewölbte Platten bzw. Konstruktionen gefertigt werden können:
Bei der Spantenbauweise werden beispielsweise aus vielen Segmenten bestehende Stahlkonstruktionen errichtet, die anschließend mit gekrümmten Platten, beispielsweise aus Kunststoff oder Glas, bedeckt werden. Ein solches Verfahren ist allerdings sehr aufwändig und die Konstruktion ist teuer und materialintensiv.

Weiters ist es bekannt, Freiformen durch Biegen und Umformen von ursprünglich ebenen Platten zu erzeugen. Dieses Verfahren wird insbesondere bei Metallkonstruktionen eingesetzt und setzt voraus, dass die Platten zerstörungsfrei gewölbt werden können.

Weiters ist es bekannt, Polymerschmelzen auf negativ gekrümmte Innenformen aufzubringen, um auf diese Weise gewölbte Abdrücke zu erhalten.

Auf dem Gebiet der Architektur ist außerdem ein Verfahren bekannt, mit dem räumlich gekrümmte Schalungselemente unter Verwendung von pneumatisch gestützten Formen, beispielsweise aufblasbaren Ballons, gefertigt werden können. Dabei wird eine flüssige Betonmasse auf die Außenfläche der aufgeblasenen Form aufgebracht und erhärtet dort. Nach Entfernung der Innenform, bleibt eine in der Regel kuppelförmig gewölbte und dadurch tragfähige dünnwandige Betonkonstruktion stehen.

Dieses Verfahren wurde in verschiedener Weise weiterentwickelt, beispielsweise durch die Einbringung von besonderen Bewehrungen, die Aufbringung von Kunststoffschäumen auf die Innenseite der Form etc.

*Die WO 95*/*12727 A1 offenbart eine wiederverwertbare Stützform, wobei in den Raum zwischen einer Innen- und Außenfolie*, *wie z.B. Sand oder Sägestaub, ein Pulver unter Druck eingebracht wird, das mittels Vakuumierung versteift wird. Diese mittels Vakuum stabilisierte Stützform dient als steifer, letzlich wieder einsetzbarer Formgebungskörper für eine auf die derart erhaltene Formgebungs*-*Form außen durch Spritzauftrag aufzubringende, in fließfähig-plastischer Form vorliegende Masse, wie beispielsweise Beton, die letztlich aushärten gelassen wird.*

*Die* EP 1512804 A2 *beschreibt ein Verfahren zur Herstellung der Wandung eines Bauwerks, wobei eine gekrümmte, die Form der Wandung definierende erste Membran, die als Innenform agiert, in einem vorgespannten Zustand mit einem Versteifungsmaterial beschichtet wird, welches sich während des anschließenden Aushärtens innig mit der ersten Membran verbindet. Bei dem derart erhaltenen Bauwerk ist die Membran der Innenform absolut nicht mehr abtrennbar, sie soll ganz gezielt permanent mit dem dort beschriebenen Bauteil verbunden bleiben.*

*Die* DE 3442904 A1 *beschreibt ein Verfahren, bei dem durch geeignete Verrichtungen ein gekrümmte Formkörper hergestellt wird. Als Bauwerkstoffe sind gemäß diesem Verfahren u.a. Betonschäume*, *Leichtbeton mit entsprechenden Zusätzen wie Perlite oder Kunststoffschäume vorgesehen.*

Bei *vielen dieser bekannt gewordenen* Verfahren liegt ein kritischer Punkt darin, das Material in flüssiger bzw. breiiger Form so auf die Außenfläche der Form aufzubringen, dass es auch auf der Form verbleibt und nicht abrinnt oder abtropft und außerdem gut, fest und homogen aushärtet. Es dürfen sich dabei keine Spannungsrisse bilden und es müssen Parameter, wie die Wärmeleitfähigkeit, die Festigkeit und andere statische Parameter, beachtet werden.

Es ist somit Aufgabe der vorliegenden Erfindung, ein Verfahren *der eingangsgenannten Art* zu schaffen, mit dem auf einfache und kostengünstige Weise, konstruktiv und statisch günstige und gleichzeitig individuell formbare gewölbte Platten bzw. Schalen und Freiformen hergestellt werden können.

Diese Aufgabe wird durch die **kennzeichnenden Merkmale des Anspruchs** 1 gelöst.

Dabei ist vorgesehen, dass nach dem Aufbringen des Rohmaterials auf die Außenfläche einer Innenform, eine material- bzw. luftdichte Außenhülle über zumindest einen Teilbereich, vorzugsweise über die gesamte Fläche, des Rohmaterials gelegt wird, sodass zwischen der Außenhülle und der Innenform bzw. dem Rohmaterial ein evakuierbarer Zwischenraum ausgebildet wird. Dieser Zwischenraum wird auf einen absoluten Druck von weniger als 0,7 bar evakuiert und das Rohmaterial wird dann ausgehärtet bzw. verfestigt.

Wenn vollständig evakuiert wird, wird je nach Materialfeuchte und Temperatur ein absoluter Druck von 0-20mbar erreicht. Bei den meisten Musterstücken wurde auf etwa 80-120mbar absolut evakuiert. Bei Dämmplatten kann auch eine Evakuierung auf 700mbar absolut ausreichend sein. Hier wird das Material nicht so fest komprimiert.

Durch den Einsatz des erfindungsgemäßen Verfahrens ist einerseits die freie Gestaltung von individuellen und außergewöhnlichen Freiformen möglich, da die Formen der Innenform und der Außenhülle nahezu beliebig variiert werden können. Auch hinsichtlich Dimensionierung sind keine Grenzen gesetzt und das Verfahren kann sowohl für kleinflächige Schalungselemente zum Verkleiden von Gebäudefassaden als auch für großflächige Dachkonstruktionen oder ganze Gebäude eingesetzt werden.

Das Verfahren kann schnell und kostengünstig geführt werden und baustellenseitig leicht eingerichtet werden. Dadurch herrscht große Flexibilität beim Einsatz. Außerdem sind die für das Verfahren notwendigen Bestandteile leicht und ohne Aufwand zu transportieren, aufzubauen und wieder abzubauen.

Die Aufbringung der Außenhülle sorgt für einen Schutz des Rohmaterials in der Phase der Aushärtung bzw. Verfestigung. Insbesondere wird das Rohmaterial vor äußeren Witterungseinflüssen geschützt, wie beispielsweise Regen, Hagel oder Sandstürmen. Solche Einflüsse können das Aussehen, die Form und/oder die Oberfläche des Materials beeinträchtigen oder beschädigen. Schlimmstenfalls wird dadurch der Aushärtungsvorgang empfindlich verlängert oder abschnittsweise unterbunden, wodurch Fehlstellen in der Matrix entstehen, die die Statik und strukturelle Integrität beeinträchtigen können. Die Außenhülle gewährt somit ein sicheres, gleichförmiges, geschütztes Aushärten des Materials bei möglichst konstanten Bedingungen.

Der auf diese Weise erhaltene Bauteil kann mit einer oder mehreren zusätzlichen Deckschichten versehen werden, um beispielsweise eine Versiegelung als Schutz vor Witterungseinflüssen wie z.B. Wasser, Feuer oder gegen UV-Licht, zu erreichen. Dafür lassen sich handelsübliche Putz- und Lacksysteme genauso verwenden, wie spezielle Folien und Flüssigkunststoffe, die die Oberfläche nach "außen" und/oder "innen" hin mit den entsprechenden Eigenschaften aufwerten. Die Oberfläche der Composits kann durch gitter- oder netzartige Folien mit einer rauen griffigen Oberflächenstruktur versehen werden, die eine Oberflächenbeschichtung ermöglicht.

Die meist flüssigen oder pastösen Beschichtungen werden vorzugsweise mittels geeigneten Spritzverfahrens aufgebracht und anschließend an der Oberfläche homogenisiert. Beispielsweise kann auf eine gekrümmmte Compositoberfläche zuerst ein staubbindender Haftvermittler aufgespritzt werden und im Anschluss ein zementgebundener Putz, der dann mit optischen Oberflächeneffekten verspachtelt wird.

Zusätzlich wird beim erfindungsgemäßen Verfahren ein Vakuum bzw. Unterdruck aufgebracht bzw. angelegt, sodass das Rohmaterial zusätzlich verfestigt wird. Auch werden dadurch störende Lufteinschlüsse entfernt bzw. vermindert, wodurch sich das Material gleichmäßiger verteilt bzw. homogener wird und sich dadurch dessen Dichte erhöht.

Durch das erfindungsgemäße Verfahren lassen sich freitragende, kältebrückenfreie, großflächige Elemente mit hoher struktureller Integrität auch in großen Stückzahlen fertigen.

Was das Rohmaterial (Composit) betrifft, so sind als Bindemittel folgende bevorzugt:
Solche auf Basis von Lignin, Wassergläsern, Tannin, Methylzellulose, Leinöl, Glutin-, Kasein-, Stärkeleime, Puzzolane, Casein, Kalkcasein, Epoxid- und Polyesterharzen, Isocyanat, Polyurethan und herkömmliche Polymerverbindungen wie z.B. PVAc Leime.

Allerdings können auch übliche hydraulische Bindemittel wie Zement, Gips, Magnesiabinder oder Kalk eingesetzt werden. Auch Mischungen aus zwei oder mehreren der genannten Komponenten sind möglich.

Die Wahl des Bindemittels beeinflusst maßgeblich die Wasserbeständigkeit. Das Bindemittel kann beispielsweise bei einem flüssigen Bindemittel mittels Airless- oder AirCoat-Verfahren aufgebracht werden.

Z.B. können der Kern mit Ligninsulfonat oder Kalkcasein und die Deckschichten mit einem mineralisch gebundenen Composit gebildet sein.

Als Fasern sind folgende bevorzugt:
Naturfasern aus Stroh, Flachs Hanf, Kenaf, Wasserhyanzinthe, Kokos, Brennnesseln, Bambus, Wolle, Zellulose, Jute, Schilf, Baumwolle oder Hartfasern wie Holzfasern und andere natürliche Polymeren. Es können zusätzlich gegebenenfalls auch Kunstfasern z.B. Glaswolle, Kevlar, Glasfser und andere Chemiefasern oder synthetische Polymere bzw. eine Kombination aus Naturfasern und Kunstfasern wie z.B. Textilien verwendet werden.

Die zur Anwendung kommenden Fasern können verschiedene mechanische, chemische biologische und witterungsbedingte Bearbeitungsschritte durchlaufen, um optimal aufbereitet zu sein.

Diese sind: Schneiden, Mahlen, Häckseln, Quetschen, Kartieren, Laugen, Aufspleißen, Auffasern, Dampfaufschluss, Ultraschall, Trocknen und Befeuchten. Des Weiteren können die Fasern, je nach benötigten Anforderungen, auf verschiedene Längen gebracht werden, z.B. durch Aussieben.

Einsehbar ist auch eine Kombination aus zwei oder mehreren Faserstoffen mit verschiedenen Längen, sowie die Zumengung von Pflanzenmaterial, das an sich keine guten Fasereigenschaften besitzt, aber dafür die Qualität des Produktes, z.B. hinsichtlich Schädlingsresistenz, erhöhen. Dies kann z.B. durch die Beimengung von Rainfarn erfolgen.

Des Weiteren können verschiedenste Zuschlagsstoffe wie z.B. Borax und Kieselsäure dem Rohmaterial beigemengt werden, um z.B. dessen Brandfestigkeit zu erhöhen oder Beeinträchtigungen durch Schädlinge vorzubeugen.

Was die Eigenschaften des neuen Verbundmaterials betrifft, so ist hiezu folgendes auszuführen:
Bei der Verwendung von Strohfasern mit Ligninsulfonat ergibt sich beispielsweise eine Dichte des fertigen Composits von ca. 0,3 bis 0,5 t/m³, bei einer Verdichtung bei -900 mbar Differenzdruck und einer Gewichtsaufteilung Bindemittel zu Stroh von 1:1. Durch gezielte Anordnung der Fasern ergibt sich eine gute Wärmedämmfähigkeit (Wärmeleitfähigkeit λ <0,1 in W/(mK). Je nach Kompression lassen sich Werte im Bereich von herkömmlichem Dämmmaterial, wie z.B. einer Außenwand aus Mauerziegeln mit einer Dicke von 17,5cm mit Wärmedämmverbundsystem (PUR; 12,5cm Dicke) erreichen.

Der Rohmaterial kann bevorzugterweise luftdurchlässig ausgeführt werden. Die Luftdurchlässigkeit wird vom Verhältnis Faseranteil zu Bindemittelanteil der verwendeten Faser, dem verwendeten Bindemittel und der Kompression bei der Evakuierung bestimmt.

Der Rohcomposit kann luftundurchlässig ausgeführt werden.

Der Rohcomposit kann luftundurchlässig ausgeführt werden und Lufteinschlüsse enthalten, um z.B. den Dämmwert zu beeinflussen.

Der Vakuumierungsvorgang kann unterbrochen und wieder aufgenommen werden, um die Eigenschaften des Rohmaterials zu beeinflussen, z.B. hinsichtlich Wärme- und Schalldämmung.

Für das neue Verfahren eignet sich z.B. eine Kombination von Strohfaser mit einem biologischen Bindemittel, wie z.B. Ligninsulfonat, Wasserglas oder Kalkkasein besonders gut.

Vorteilhafte Ausführungsformen und Weiterentwicklungen des Verfahrens gemäß der Erfindung werden durch die **Merkmale** der **Ansprüche** 2 bis *12* näher beschrieben:
So ist es vorteilhaft, wenn die Innenform und gegebenenfalls die Außenhülle nach dem Aushärten des Rohmaterials wieder entfernt werden. Die Innenform kann auf diese Weise beliebig oft wiederverwendet werden. Überdies schafft die Außenfläche der Innenform meist entweder eine glatte oder anders strukturierte Oberfläche auf der Innenseite des gewölbten Rohmaterials bzw. der daraus gebildeten Platte bzw. Schale und es ist eine Entfernung der Innenform auch aus diesen Gründen vorteilhaft. Auch die Außenhülle kann entfernt und somit wieder verwendet werden.

Alternativ kann aber auch vorgesehen sein, dass die Außenhülle nach dem Aushärten des Rohmaterials in ihrer Position belassen wird und mit der Platte oder Schale fest verbunden bleibt. Die Außenhülle dient in diesem Fall als zusätzlicher Schutz der Platte oder optischen Zwecken. Sie kann z.B. mit einem Aufdruck versehen sein.

Das neue Verfahren ist sehr einfach und kann schnell auch von nicht eingeschulten Fachkräften baustellenseitig vorgenommen werden. Es übt der Umgebungsdruck nach der Evakuierung eine hohe Kraft auf das im Zwischenraum zwischen Innenform und Außenhülle befindliche Rohmaterial aus, wodurch es zu einer Erhöhung der Festigkeit der Schale oder Platte kommt. Diese Festigkeitserhöhung kann also auf sehr einfache Weise erzielt werden, da dafür lediglich eine oder mehrere Vakuumpumpe(n) für die Evakuierung des oben genannten Zwischenraumes erforderlich ist *bzw. sind.*

Weiterns kann vorgesehen sein, dass, insbesondere vor der Aufbringung und Aushärtung des Rohmaterials und der Aufbringung der Außenhülle, im auf die innenform aufgebrachten Rohmaterial elektrische, hydraulische und/oder Wasser- Leitungen, Rohre, Schläuche, Leerrohre, Aussparungen, Verstärkungs- bzw. Versteifungselemente, beispielsweise Bänder oder Seile, Verbindungselemente und/oder kraftaufnehmende Vorrichtungen eingebracht bzw. ausgeformt werden. Auf diese Weise können fertige und installationsbereite Module oder Einheiten schnell und einfach hergestellt werden. Durch die eingearbeiteten Elemente kann z.B. eine vorteilhafte kraftschlüssige Verbindung mit dem Fundament bzw. mit dem nächsten Bauteil erfolgen.

Die nachfolgend beschriebenen, besonderen Verfahrensführungen sehen die Verwendung von besonders ausgestalteten Vorrichtungen bzw. Bauteilen vor:
So ist es vorteilhaft, wenn vorgesehen ist, dass die Außenfläche der Innenform in jedem Punkt, von oben bzw. außen gesehen bzw. in Betriebsstellung, positiv gekrümmt, insbesondere konvex, ist.

Auf diese Weise kann beispielsweise ein Gebäude bereits in seiner ursprünglichen Ausrichtung bzw. Lage errichtet werden und braucht nicht nach Aushärtung des Baustoffs aus einer Form gekippt oder gestürzt zu werden. Dies ist insbesondere bei dünnwandigen, zerbrechlicheren Konstruktionen vorteilhaft.

Vorteilhaft erfolgt die Produktion des jeweiligen Objekts vor Ort und in seiner endgültigen Position, damit ein weiteres Heben mit einem Kran oder ein Transport vermieden wird.

Auch ist es möglich, dass Teilbereiche der Außenfläche negative Krümmung besitzen bzw. konkav gekrümmte Teilbereiche ausgebildet sind. Derartige negativ gekrümmte Einbuchtungen bzw. Senken können beispielsweise durch nach unten gerichtetes Abspannen von Teilbereichen der Innenform mit Seilen, Spanngurten, Spannvorrichtungen od. dgl. ausgebildet werden. Auf diese Weise können auch wellenförmige bzw. in Teilbereichen trichterförmige Konstruktionen erreicht werden.

Die aufblasbare Innenform nimmt ihre Gestalt primär durch dort eingebrachte Luft mit Überdruck an und kann sekundär über innenliegende Abspannungen, sowie von außen einwirkende Kräfte in ihrer Form bestimmt werden.

Grundsätzlich erlauben aufblasbare Innenformen komplexe Gestaltungsmöglichkeiten.

Die Innenform erlaubt es, einen höheren Innendruck gegenüber dem Außendruck aufrecht zu erhalten und kann somit eine:
1. aufblasbare, rohmaterial-dichte Form
   a. aus einer luftdurchlässigen Membrane (für Belüftungszwecke zur Bauteiltrocknung, siehe unten)
   b. überwiegend luftdicht (wie AirRace Pylon, Luft entweicht über die Nähte)
   c. zur Gänze luftdicht (z.B. wie Schlauchboot)
   sein.

Wenn eine tragfähige Unterkonstruktion, z.B. aus Stahl oder Holz, verwendet werden soll, kann auch ein auf die Unterkonstruktion aufgebrachtes Netz oder Gewebe als flächengebendes Element dienen. Die Form der Fläche wird über die Ausformung der Unterkonstruktion vorgegeben und kann wie eine aufblasbare Innenform mittels Abspannungen oder ähnlichem ausgeformt werden. Zudem kann durch das Anlegen eines Differenzdrucks die gewünschte Wölbung erzeugt werden.

Die Unterkonstruktion/das Traggerüst kann z.B. durch Rippen, Spanten, Leimbinder oder eine Stahlkonstruktion gebildet werden, welche im Anschluss mit einem Netz (Löcher im Netz, z.B. Lochgröße kleiner <400cm²) belegt werden, welches die Fläche der Innenform bildet.

Die Position des Netzes kann je nach gewünschter Ausführung und Verwendung in unterschiedlichen Höhen an dem Traggerüst angebracht werden, z.B. beim Leimbinder sowohl an der Unter- als auch an der Oberseite. Je nach Anordnung des flächengebenden Elements kann das Gerüst auch komplett vom Rohmaterial eingeschlossen werden und darin verbleiben.

Die Innenform kann für einfache Formen auch durch einen Negativabdruck der gewünschten Form, beispielsweise aus Styropor, Holz oder Stahl, realisiert werden.

In diesem Zusammenhang ist es vorteilhaft, wenn die Innenform eine pneumatisch gestützte bzw. vorgespannte bzw. durch inneren Überdruck stabilisierte Membran ist bzw. als flexibler, Volumens veränderlicher Hohlkörper, der durch Einbringung eines Mediums seine Steifigkeit erhält, ausgebildet ist, insbesondere in Form einer nahezu luftdichten Hülle. Im Inneren der Innenform wird ein Innenüberdruck angelegt, wodurch vorzugsweise eine Druckdifferenz im Vergleich zum aktuellen äußeren Umgebungsdruck von ≥ 5 mbar, insbesondere ≥ 30 mbar, herrscht.

In weiterer Folge wird unter der Bezeichnung Innenüberdruck bzw. Überdruck im Inneren der Innenform der relativ zum Atmosphärendruck bzw. Luftdruck bzw. Umgebungsdruck außerhalb der Innenform gemessenen Differenzdruck in mbar verstanden.

Der technisch mögliche Innenüberdruck ist auch abhängig von der Größe der Innenform. Beispielsweise liegt der Innenüberdruck bzw. Differenzdruck zum Umgebungsdruck bei einem ellipsoiden Hohlkörperdurchmesser von 8 m in der Größenordnung von 5 bis 30 mbar. Bei Verwendung hochfester textiler Materialien kann der Innenüberdruck auch erhöht werden. Zusätzlich können noch zugaufnehmende Elemente, wie Bänder und Seile aus verschiedenen Materialien eingesetzt werden.

Bei mast- bzw. rohrförmigen Elementen z.B. mit etwa 0,5 m Durchmesser kann der Innenüberdruck auch in der Größenordnung von 500 bis 1000 mbar liegen.

Durch die Verwendung derartiger Innenformen lassen sich dieselben mehrmals wiederverwenden und können individuelle Freiformen geschaffen werden.

Es ist vorteilhaft, wenn an die Innenform ein Gebläse bzw. eine Pumpe anschließbar ist, über das das Medium in die Innenform einbringbar ist bzw. über das der absolute Innendruck bzw. der Innenüberdruck in der Innenform kontinuierlich und laufend veränderbar ist. Auf diese Weise ist die Innenform auch nicht hermetisch gegen die Umgebung abgeschlossen, sondern kann der Innendruck variiert und optimiert werden. Dies ist insbesondere dann vorteilhaft, wenn durch Sonneneinstrahlung oder durch bei der Aushärtung des Rohmaterials entstehende Wärmeentwicklungen Temperaturschwankungen entstehen, wodurch sich die Innenform in ihrem Volumen und ihrer Größe verändern würde und sich dadurch Spannungsrisse in der Platte bilden könnten.

Alternativ kann jedoch in gewissen Fällen auch eine hermetisch abgeschlossene Innenform vorgesehen sein, die insbesondere dann vorteilhaft ist, wenn die Innenform nur einmal verwendet wird, nur kurzzeitig im Einsatz ist und/oder bei Verfahren ohne nennenswerte Temperaturschwankungen eingesetzt wird.

Vorteilhaft kann auch die Kombination von verschiedenen Innenformen sein, die z.B. auch zeitlich nacheinander oder räumlich übereinander aufgeblasen werden können.

Alternativ kann vorgesehen sein, dass die Innenform als, gegebenenfalls verschiebbar gelagerter, starrer, biegesteifer Körper ausgebildet ist, insbesondere dass die Innenform zerlegbar aus einer Anzahl von, vorzugsweise untereinander identischen, Modulen zusammengesetzt ist. Eine derartige Innenform ist ebenso einfach einsetzbar und bietet eine biegesteife, verlässliche Innenform, die ihre Form unabhängig von der Temperatur beibehält. Beispielsweise ist eine solche Form für schwere und dickere Platten, beispielsweise für die Anwendung als Lärmschutzwand geeignet.

Eine konstruktiv einfache Innenform ergibt sich, wenn die Innenform als einfacher Hohlkörper frei von innenliegenden Stegen, Versteifungen oder Abspannpunkten ausgestaltet ist.

Für einfache Formen, z.B. Kugeln oder Zylinder, z.B. für Notunterkünfte, werden in der Regel keine innen- oder außenliegenden Abspannungen benötigt, bei architektonisch außergewöhnlichen Freiformen jedoch schon. Derartige Abspannungen können auch von innen nach außen geführt werden, um eine spezielle Zuspitzung, z.B. eines Dachsegments, zu ermöglichen. Das kraftaufnehmende Seil durchstößt dann die Außenhülle und muss extra abgedichtet werden. Alternativ können auch innenliegende, vorzugsweise ausziehbare bzw. verlängerbare Stützen verwendet werden, die durch den ausgeübten Druck auf die Innenseite der Innenform eine Zuspitzung der Platte erlauben. Optional können diese Stützen auch dauerhaft unter der Platte verbleiben. Auch können Zugseile vorgesehen sein, die außen an der Außenfläche der Innenform ansetzen und diese nicht durchdringen und die Außenfläche lokal nach außen ziehen.

Die Innenform kann vorteilhafterweise begehbar ausgeführt sein. Dies kann z.B. durch eine zweischalige Formgebung erreicht werde. Der Raum zwischen den beiden Schalen, die beispielsweise durch Stege oder Bänder miteinander verbunden sind, wird mit dem gewünschten Betriebsdruck beaufschlagt, dadurch wird eine barrierefreie Begehung ermöglicht. Diese Bauweise ist besonders in Zusammenhang mit der Verwendung von sogenanntem Abstandsgewebe interessant. Abstandsgewebe ist ein Produkt, das ähnlich einer Luftmatratze aufgebaut ist, wobei zwei Außenflächen mit einer Vielzahl von Fasern miteinander verbunden sind und beim Aufblasen eine Fläche bilden. Gebräuchliche Dicken liegen im Bereich von 3 bis 30 cm. Das Material ist als Rollenware in verschiedenen Breiten erhältlich.

Als Innenform sind auch die, beispielsweise von Hüpfburgen, bekannten gestängefreien aufblasbaren Zelte bzw. Inflatables geeignet.

Der Auftrag des Rohmaterials erfolgt in der Regel erst dann, wenn die Innenform ihre endgültige Form und Stabilität erreicht hat.

Alternativ kann mit dem Auftragen jedoch schon zu einem Zeitpunkt begonnen werden, bevor die Innenform ihre endgültige Form erreicht hat. Dadurch kann das Rohmaterial einerseits an schwer oder nicht zugänglichen Stellen aufgebracht werden. Anderseits kann eine Stauchung und dadurch zusätzliche Verdichtung des Rohmaterials erfolgen, wenn die Elastizität der Innenform bei einem höheren Druck zum Auftrag des Rohmaterials genutzt wird und anschließend der Innendruck reduziert wird und damit durch die Verringerung der Abmessungen eine gleichmäßige Komprimierung des Rohmaterials erreicht wird.

Die Innenform kann auch aus mehreren Teilen oder Segmenten bestehen, die z.B. partiell und Schritt für Schritt aufgeblasen werden.

Das Rohmaterial kann entweder auf die gesamte Außenfläche der Innenform oder nur auf einen oder mehrere, gegebenenfalls zusammenhängende, Teilbereiche der Innenform aufgebracht werden. Wird das Rohmaterial nur auf einen Teilbereich aufgebracht, kann die entstehende Kante manuell durch das Einbringen einer Randfolie gerundet ausgeführt werden. Dabei wird die Randfolie, die auch teilweise oder ganz eine Trennfolie sein kann, manuell so gespannt, dass das bei der Aufbringung weiche Material eine runde weiche Kante erhält. Durch die Aufbringung von zusätzlichen Streifen bzw. Folien werden somit mögliche Kanten abgerundet.

Bei einfachen und kostengünstigen Objekten kann auch eine Einstiegsöffnung für Personen vorgesehen sein und damit auch das Einbringen von Maschinen und Hilfsmittel, z.B. durch einen widerverschließbaren Reißverschluss erfolgen, der durch einen Klettverschluss zusätzlich abgedichtet wird.

Um eine möglichst leichte Ablösung der Innenform von der ausgehärteten Platte zu ermöglichen ist es vorteilhaft, wenn auf der Außenfläche der Innenform eine Trennschicht, insbesondere eine Anti-Haft-Beschichtung, vorzugsweise aus Polyethylen oder Polyfluorethylen, aufgebracht wird, aufgebracht wird bzw. vorgesehen ist.

Eine vorteilhafte Weiterentwicklung des Verfahrens ist dadurch gekennzeichnet, dass die Außenfläche der Innenform und/oder die Trennschicht mit einer Oberflächenstruktur, beispielsweise einem Muster oder mit Rippen, versehen sind. Dadurch können optisch attraktive Oberflächengestaltungen, aber auch zweckmäßige Ausnehmungen, Ausformungen etc. ausgebildet werden, beispielsweise Kabelkanäle od. dgl.. Auch wird dadurch, beispielsweise durch umlaufende Rippen, ein Abrutschen bzw. Abgleiten des noch weichen Rohmaterials an den steileren Bereichen der Innenform verhindert.

Die später allenfalls benötigten Grundinstallationen können bereits direkt in das Rohmaterial, beispielsweise eine zukünftige Gebäudehülle, eingelegt werden, z.B. Versorgungs- und Abwasserleitungen, Leerrohre etc., die dann im Zuge der Aufbringung des restlichen Rohmaterials fest eingeschlossen werden. In das Rohmaterial können, über die komplette Konstruktion verteilt, besonders jedoch an mechanisch belasteten Stellen, Zug- und Druckkräfte aufnehmende Elemente integriert werden. Diese Elemente können aus verschiedenen Materialien, z.B. Stahl, Aluminium, Holz, Kunststoffen, bestehen und werden vorzugsweise während der Herstellung der Platte eingearbeitet. Alternativ können diese auch nachträglich angebracht werden. Vor allem Zug aufnehmende Bänder, Gurte oder Seile können über die komplette Form gelegt werden. Geeignete Bänder und Netze können auch als Blitzschutz in die Gebäudehülle eingearbeitet werden. Die erforderliche Verbindung der späteren Platte mit dem Untergrund, z.B. einer Betonkellerdecke, oder mit dem nächsten Gebäude oder Stockwerk, kann mittels formschlüssig eingearbeiteten Baustahl, Laschen oder auch über Bänder o.ä. erfolgen.

Aussparungen von Gebäudeöffnungen, beispielsweise Türen oder Fenster, können bereits während des Aufbringens des Rohmaterials berücksichtigt werden. Die Herstellung der Platte kann auch in mehreren Teilschritten durchgeführt werden, sofern die Einzelteile konstruktionstechnisch dafür ausgelegt sind oder abgestützt werden können oder entsprechende Verbindungsmöglichkeiten mit dem Bauteil eines nächsten Fertigungsschrittes eingeplant sind. Dies können beispielsweise aus der Platte bzw. Gebäudehülle herausragende Armierungsgitter sein, die die auftretenden Belastungen aufnehmen können.

Gemäß einer vorteilhaften Ausgestaltung der Erfindung ist vorgesehen, dass die Außenhülle eine flexible, gegebenenfalls elastische, Plane ist. Eine solche Plane ist leicht und einfach über die Innenform bzw. das Rohmaterial zu ziehen.

Die Außenhülle ist dabei, für die Anforderung ausreichend, luftdicht ausgeführt und kann auch mehrteilig sein, sofern zwischen den einzelnen Teilen eine ausreichend luftdichte Verbindung gegeben ist. Zwischen der Gebäudehülle und der Außenhülle kann auch eine Trennschicht eingesetzt werden. Die Innenseite der Außenhülle kann mit Rippen, Schläuchen, Gittern oder Netzen belegt sein.
oder einem anderen Muster versehen sein, um eine gleichmäßige Luftbewegung bei der Absaugung zu gewährleisten oder eine Struktur auf die noch weiche Gebäudehülle einzuprägen.

Alternativ kann vorgesehen sein, dass die Außenhülle eine starre und biegungssteife Form besitzt, vorzugsweise mit ähnlicher, gegebenenfalls gleicher, Krümmung wie die Außenfläche der Innenform und dass die Innenfläche der Außenhülle und die Außenfläche der Innenform vorzugsweise zueinander im wesentlichen parallel ausgerichtet werden bzw. sind. Eine solche Außenhülle bietet einen besseren mechanischen Schutz gegen äußere Einflüsse, erlaubt eine Begehbarkeit und wird insbesondere bei sensiblen Rohmaterialien eingesetzt.
Die Außenhülle kann auch grafisch gestaltet werden und z.B. mit einem Firmenlogo versehen werden. Auch kann die Außenhülle schnell und einfach ausgewechselt werden, um als variabler Werbeträger mit leicht austauschbaren Werbebotschaften zu fungieren. So kann z.B. nach einer gewissen Zeit die Vakuumpumpe kurz abgeschaltet werden, eine neue Werbebotschaft auf die Außenhülle aufgebracht und dann der Zwischenraum wieder evakuiert werden. Die Vakuumpumpe kann dabei mit einem Vakuummeter mit Druckschalter angesteuert sein, um ein Durchlaufen der Pumpe zu vermeiden. Wenn die Außenhülle und die Abdichtung luftdicht ausgeführt werden kann, kann die Be- und Entlüftung durch ein verschließbares Ventil erfolgen.

Um ein Abrinnen bzw. Abtropfen des noch nicht erstarrten Rohmaterials von der Innenform zu verhindern, ist es vorteilhaft, wenn das Rohmaterial eine gewisse Mindest-Zähigkeit bzw. Konsistenz aufweist, sodass eine gleichmäßige Aufbringung und Verteilung auf der Außenfläche der Innenform möglich ist, und das aufgebrachte Rohmaterial bis zur Aushärtung nahezu unverändert und ohne abzulaufen in dieser Lage verbleibt.

Zunehmend wird auch Wert auf umweltfreundliches und ökologisches Bauen und auch auf die Verwendung von ökologisch abbaubaren Materialien gelegt. Gleichzeitig müssen diese Materialien jedoch die statischen Normen erfüllen und auch insbesondere hinsichtlich Wärmeleitfähigkeit gewisse Mindestwerte aufweisen. In diesem Zusammenhang ist es vorteilhaft, wenn vorgesehen ist, dass das Rohmaterial bzw. die Platten, vorzugsweise ausschließlich, aus einem Faserverbundmaterial enthaltend Naturfasern bestehen, und insbesondere frei sind von nicht biologisch abbaubaren Bestandteilen. Zwar ist es auch möglich, künstliche Fasern, beispielsweise Glas- oder Carbonfasern, einzusetzen, bei der Verwendung von Naturfasern erhält man jedoch den Vorteil der biologischen Abbaubarkeit, der leichten Verfügbarkeit als landwirtschaftliches Nebenprodukt und der Verminderung des Treibhauseffektes. Als Naturfasern werden beispielsweise Stroh aus Getreide, Hanf oder Zuckerrohr eingesetzt. Die Fasern sind vorteilhafterweise aufgeschlossen, besitzen eine große Oberflächen und weisen einen geringen Staubanteil auf.

Je nach Anforderungen können unterschiedliche Composits aufgetragen werden. Besonders vorteilhaft erscheint die Verwendung von spezifisch an die jeweiligen Erfordernisse angepassten Composits (Modifikation Bindemittel bzw. Faser), die "Nass-in-Nass" (bezeichnet die Faser, welche mit dem Bindemittel benetzt wurde und einen nassen Eindruck vermittelt) durch nacheinander abfolgende Beschickung der Auftragsvorrichtung, beispielsweise mit einem Hanfballen nach einem Strohballen oder Epoxydharz nach Lignin aufzutragen. Natürlich können auch die einzelnen Schichten jeweils nacheinander aufgetragen und ausgehärtet werden.

Eine mögliche vorteilhafte Kombination kann beispielsweise der Auftrag eines feuerbeständigen Composits innen, sowie einer wasserbeständigen Deckschicht außen, z.B. als Oberflächenversiegelung sein. Die statisch tragende Schicht kann z.B. aus Bambusfasern, welche deutlich bessere mechanische Eigenschaften aufweisen als die Strohfasern, im Verbund mit einem geeigneten Bindemittel bestehen, um entsprechend hohe mechanische Festigkeiten zu erreichen. Die Kernschicht der Sandwichkonstruktion kann auch aus Fasern mit deutlich schlechteren mechanischen Eigenschaften, wie z.B. Stroh, im Verbund mit einem entsprechenden Bindemittel bestehen.
Besonders vorteilhaft erscheint die Möglichkeit die einzelnen Schichten nach ihrer Verwendung auf schnellem und einfachem Wege mechanisch voneinander zu trennen und getrennt zu recyceln.

Um die Eigenschaften des Rohmaterials und der Platten zu beeinflussen, ist es vorteilhaft, wenn das Rohmaterial bzw. die Platten weitere Füllstoffe und/oder zumindest ein unter Luftabschluss bzw. unter verringertem Luftdruck aushärtendes Bindemittel enthalten. Als Bindemittel kommen beispielsweise PVAc, Leime, Kalkkasein, Polymere, Harnstoffharze, Wasserglas od. dgl. in Frage.

Das Abbinden des Rohmaterials zur Herstellung eines formstabilen Bauteils kann, wie folgend beschrieben, vorgenommen werden:
Es kann ein Bindemittel verwendet werden, welches bereits im Vakuum bindet, z.B. Wasserglas, bzw. können Bindemittel zur Anwendung kommen welche eine Trocknung benötigen. Die Trocknung kann durch:
   - bevorzugter Weise das Austreiben von Wasser
   - das Einbringen von Gasen oder Flüssigkeiten und/oder
   - durch eine Temperaturerhöhung
   erreicht werden.

Die unten angeführten Verfahrensschritte werden je nach Erfordernissen des Rohmaterials und deren Eigenschaften einzeln durchgeführt oder miteinander kombiniert.
1. Vakuumverdampfung
2. Umlufttrocknung
3. Durchströmung mit Luft
4. Granulat
5. Öffnung der Verschalung
6. Kombination von 1.-5.

### 1. Vakuumverdampfung:

Durch das Senken des Innendrucks wird der Siedepunkt der Flüssigkeit herabgesetzt (z.B. Siedepunkt Wasser: etwa 20° Celsius bei 20mbar), diese verdampft und wird anschließend mittels Vakuumpumpe abgesaugt.

### 2. Umlauftrocknung:

Im geschlossenen Kreislaufsystem wird Dampf, bzw. ein Dampf-/Luftgemisch in den Kreislauf geführt und z.B. über Kondensation und/oder Absorption oder das Führen des Luftstromes über hygroskopisches Material gebunden. Vorteilhaft ist die Anwendung bei starkem Unterdruck zur Senkung des Siedepunktes und Aufrechterhaltung der Komprimierung.

Die Trocknung kann auch durch Kondensation im Umlaufbetrieb erfolgen. Dabei wird im unter starken Unterdruck stehenden Kreislauf die feuchte Luft aus dem Bauteil abgeführt, kondensiert, erwärmt und wieder getrocknet und anschließend erneut dem Bauteil zugeführt. Diese Umwälzung kann z.B. durch Seitenkanalverdichter oder Kompressoren mit Trocknungsanlage erfolgen.

### 3. Durchströmung

In diesem Fall wird durch ein geeignetes Ventil und durch geeignete Be- und Entlüftungsvorrichtungen, also z.B. durch Verzweigungen: wie z.B. luftdurchlässiges Gewebe, Vliese, Netze, Gitter, Schläuche, Rohre das gesamte Bauteil durchströmt. Dabei kann es vorteilhaft sein, wenn das angesaugte Gas, z.B. Luft vorgetrocknet und/oder erhitzt ist. Die Durchströmung kann z.B. durch einen Seitenkanalverdichter erfolgen. Vorteilhaft kann auch eine Erwärmung des Bauteils sein. Dies kann vorzugsweise über wasserdurchströmte Heizleitungen erfolgen, durch vorgewärmte Luft und/oder durch Strahlung, z.B. Infrarot- oder Mikrowelle bzw. durch Wärmezufuhr von außen.

### 4. Granulat

Im System befindliche Flüssigkeiten können durch ein z.B. hygroskopisches Material aufgenommen werden. Für die Aufnahme von Wasserdampf kann z.B. Silikagel verwendet werden. Dieses Granulat kann dem Rohmaterial direkt beigemengt werden, aber auch mithilfe einer aufliegenden "offenzellig porösen" Matte innerhalb der "allseitig umschlossenen luftdichten Hülle" wirksam werden.

### 5. Öffnen des Bauteils

Das Bauteil kann teilweise oder zur Gänze von der allseitig umschließenden Hülle getrennt werden. Dadurch wird eine großflächige Belüftung und Durchströmung des Bauteils erleichtert. Die Durchlüftung findet vorzugsweise mittels getrockneter, erwärmter Luft statt. Es kann eine Innenform auch als stützendes Element, ganz oder teilweise, erhalten bleiben. Es können unterschiedliche luftdurchlässige Membranen aufgebracht werden, um auf unterschiedliche Bauteilstärken zu reagieren und deren Trocknung günstig zu beeinflussen.

Mit "Aufbringen/Auftreffen" des Rohmaterials auf die Innenform wird jener Moment bezeichnet, in dem die Faser das Fördersystem verlässt und auf die Innenform auftrifft, also z.B. zwischen der Düse und der Innenform. Für das Auftreffen der geförderten Faser des Rohmaterials kann eine Förder- und Mischanlage vorgesehen sein, umfassend ein Fördergebläse mit manueller oder automatischer Beschickung, vorzugsweise mit bereits aufbereiteten, z.B. gemahlenen, Naturfasern. Optional kann z.B. auch direkt eine Strohmühle mit Gebläse als Kombigerät verwendet werden. An das Fördergebläse angeschlossen ist ein entsprechend dimensionierter Förderschlauch, der das Luft Faser Gemisch auf der Baustelle zum Aufbringungsort transportiert. Die Einbringung des Bindemittels erfolgt im Zuge des Verlassens des Förderschlauchs mittels einer geeigneten Anordnung von Düsen zur gleichmäßigen Benetzung der Fasern mit Bindemittel oder parallel mittels Sprühauftrag auf die jeweils oberste Faserschicht der Gebäudehülle.

Das Zusammenführen der Faser mit dem Bindemittel kann auf folgende Arten erfolgen:
Die Faser wird unmittelbar vor dem Aufbringen auf die Form mit dem Bindemittel benetzt.

Die Faser wird vor dem Aufbringen auf die Form mit dem Bindemittel vermischt und anschließend z.B. über Förderbänder zur Form transportiert und aufgetragen.

Der Faser wird im Moment des Aufbringens auf die Form das Bindemittel (in Pulverform) beigefügt.

Der Faser wird vor dem Aufbringen auf die Form das pulverförmigen Bindemittel beigemengt.

Die Aktivierung des Bindemittels erfolgt bindemittelspezifisch. Zu beachten ist hier die Viskosität des Bindemittels bzw. dessen Aggregatszustand (flüssig, pulverförmig).

Die Aktivierung des Bindemittels kann mittels Temperaturerhöhung, UV-Strahlen, Wasserentzug, Zugabe von Wasser Durchströmen lassen von Gasen, z.B. Luft oder CO2

Eine bevorzugte Aufbringungsmethodik sieht vor, dass die Fasern mit dem Bindemittel bereits vor der Aufbringung intensiv vermischt werden. Alternativ kann die Mischung der Fasern mit dem Bindmittel erst unmittelbar vor dem Kontakt mit dessen Außenfläche erfolgen.

Das Rohmaterial wird durch einen Schlauch zur Innenform transportiert und über einen geeigneten (Spritz-)Düsenkopf auf die Innenform aufgetragen, also durch Aufspritzen, Aufsprühen oder Aufblasen; beispielsweise kann dies mittels Aircoat-Verfahren erfolgen. Weiterns kann eine Zuführung und anschließende Aufbringung des Rohmaterials mittels Förderbandsystem zweckmäßig sein.

Das Rohmaterial, also Faser und Bindemittel werden entweder getrennt zum Düsenkopf gefördert und dort zusammengeführt, bzw. vorher vermischt und gemeinsam zum Düsenkopf befördert oder aber einzeln gefördert und erst direkt am Bauteil zusammengeführt.

Die Förderung der Fasern kann z.B. mittels Luft erfolgen, das Bindemittel kann z.B. Airless gespritzt werden oder pulverförmig aufgeblasen werden. Möglich ist auch eine vorherige Vermischung und Zwangsförderung des Rohcomposits mittels Schlauch oder Förderband.

Bei besonderen gestalterischen Anforderungen kann auch ein bereits unter Unterdruck stehender Vakuumsack mit Rohmaterial nachgeformt werden, z.B. auch durch das nachträgliche Auflegen auf eine Innenform oder Unterkonstruktion, um z.B. eine gewünschte Faltenbildung zu erreichen.

Um eine hohe Festigkeit, kombiniert mit einer optisch ansehnlichen Außen- und Innenseite zu erreichen, kann die Aufbringung des Rohmaterials in mehreren Schichten erfolgen, wobei insbesondere die jeweils an den späteren Sichtseiten außenliegenden Schichten kürzere Fasern enthalten und die innenliegenden Schichten längere Fasern zur Stabilisierung.

Dahingehend kann das formstabile und/oder ausgehärtete Bauteil auch durch z.B. Schleifen, Schneiden, Fräsen nachbearbeitet und/oder mit einer Farb- bzw. Druckschicht versehen werden.

Eine alternative oder ergänzende Verfahrensführung sieht vor, dass das Rohmaterial biegsame flexible, gegebenenfalls in einem aushärtbaren Kunstharz getränkte, Schläuche und/oder stabförmige Elemente bzw. Stäbe enthält bzw. aus solchen Schläuchen besteht, wobei die mit der Aushärtung starr und steif werden. Die Schläuche oder Schlauchsegmente können manuell auf die Trennschicht der Innenform aufgelegt werden, wobei die Innenform bereits vollflächig mit dem Bindemittel einspritzt ist. Nach dem Auflegen der Schläuche wird die Außenhülle innen mit Bindemittel benetzt und über das Konstrukt gezogen. Durch die Evakuierung des Zwischenraums entsteht nun ein sandwichartiger Verbund, bei dem die Innenform und Außenhülle mit den ausgehärteten Schläuchen einen festen Verbund eingeht.

Insbesondere in diesem Zusammenhang ist es vorteilhaft, wenn zumindest Teilbereiche der Innenfläche der Außenhülle vor dem Auflegen auf die Innenform bzw. Trennschicht mit einem Klebe- bzw. Bindemittel benetzt werden.

Weiters ist vorgesehen bzw. wird die Aufgabe durch eine besondere Anordnung zur Durchführung des obigen Verfahrens erfüllt und gelöst. Diese Anordnung umfasst die oben beschriebene Innenform mit einer zwei- oder dreidimensional gekrümmten Außenfläche, und weiters die, über zumindest einen Teilbereich, vorzugsweise über die gesamte Fläche, der Außenfläche der Innenform auflegbare, oben beschriebe Außenhülle. Auf zumindest Teilbereiche der Außenfläche der Innenform ist ein, die zukünftige Platte bildendes, aushärtbares Rohmaterial aufbringbar und zwischen der Außenhülle und der Innenform ist ein auf einen absoluten Druck von kleiner oder gleich 0,7 bar, evakuierbarer Zwischenraum ausbildbar.

*Diese* Anordnung ist leicht und einfach zu transportieren, zu errichten und wieder abzubauen und gewährleistet die einleitend erwähnte freie und vielfältige Formgestaltung der Platten sowie die Erreichung einer statisch festen und vorteilhaften Platte.

In diesem Zusammenhang ist es vorteilhaft, wenn vorgesehen ist, dass eine Vakuumpumpe zur Evakuierung des Zwischenraumes vorgesehen ist und/oder eine Pumpe und/oder Gebläse zur Befüllung der Innenform mit dem Medium.

Die Evakuierung des Rohmaterials geht bevorzugter Weise wie folgend beschrieben vor sich:
Das Rohmaterial befindet sich, vorzugsweise in einer allseitig umschlossenen zumindest rohmaterial-dichten Hülle. In dieser Hülle wird ein relativer Unterdruck von z.B. >0,7bar erzeugt. Die luftdichte Hülle besteht überwiegend aus einer, vorzugsweise durchsichtigen, Folie.

Es können auch Bestandteile der Trägerkonstruktion Teile der luftdichten Hülle bilden, z.B. kann ein von Stahlrahmen gebildetes Feld außen und innen mit einer luftdichten Folie versehen werden. Somit bildet der Stahlrahmen einen Teil der "allseitig umschlossenen luftdichten Hülle".

Durch das unterschiedliche Anlegen des Drucks an die allseitig umschlossene luftdichte Hülle können Bauteile mit einer unterschiedlichen Dichte und damit verschiedene Eigenschaften des Rohmaterials im späteren ausgehärteten Zustand realisiert werden. Je nach Anforderung an das Endprodukt wird z.B. bei einer notwendigen "hohen" Festigkeit eine hohe Kompression, durch den angelegten Unterdruck (theoretisch bis zu 1013mbar unter Umgebungsdruck), erreicht. Im Gegensatz dazu kann bei einer anderen Anwendung, z.B. dem Aufbringen einer Dämmung mit geringem Unterdruck (100mbar unter dem Umgebungsdruck) gearbeitet werden.

Höhere Kompressionen des Bauteils können auch durch die Steigerung des Umgebungsdrucks erreicht werden, z.B. in einer abgeschlossenen Druckkammer, also Autoklav. Besonders großformatige Bauteile können auch temporär in geeigneten Flüssigkeitsansammlungen z.B. Tauchbecken oder auch in Gewässern (See, Meer; ca. 1 bar pro 10m Tiefgang) auf entsprechende Tiefe gebracht werden, um die erforderliche Kompression zu erreichen.

Schließlich werden durch die Führung des erfindungsgemäßen Verfahrens und unter Einsatz der erfindungsgemäßen Anordnung ganz besondere zwei- oder dreidimensional gekrümmte bzw. gewölbte Platten bzw. Schalen bzw. Freiformen erhalten.

Zum Stand der Technik ist auf die DE 3132863 A1 zu verweisen, welche die Herstellung von Schalen mittels einer aufblasbaren Innenform ohne Außenhülle offenbart und auf das Buch Beton: Arten, Herstellung und Eigenschaften von Peter Grübl et. al., 2. Auflage 2001; Ernst und Sohn Verlag für Architektur, S 214 bis 218, wo die Vakuumbehandlung von Frischbeton durch eine an der Innenseite einer rigiden Außenform angeordnete Filterschicht hindurch beschrieben ist.

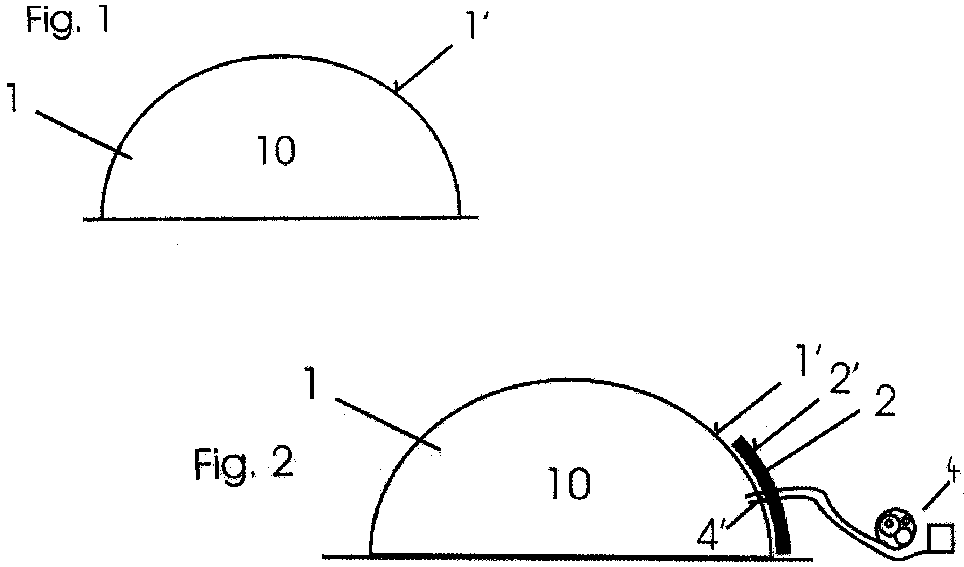

Das erfindungsgemäße Verfahren *und eine besonders geeignete* Anordnung *zu dessen Druckführung* werden nun anhand der nachfolgenden Figuren exemplarisch und nicht einschränkend, anhand eines bevorzugten Ausführungsbeispiels erörtert. Die Fig. 1 bis 5 zeigen dabei den schrittweisen Aufbau der Anordnung bzw. den schrittweisen Ablauf des Verfahrens.
Fig. 1 zeigt den Querschnitt der Innenform zu Beginn des Verfahrens.
Fig. 2 zeigt die Innenform zu Beginn der Aufbringung des Rohmaterials auf einen Teilbereich der Innenform.
Fig. 3 zeigt das vollständig auf die Innenform aufgebrachte Rohmaterial.
Fig. 4 zeigt die Anordnung nach Aufbringung der Außenhülle.
Fig. 5 zeigt das Endprodukt nach seiner Aushärtung und der Entfernung der Anordnung.

In Fig. 1 ist die Anordnung zu Beginn des erfindungsgemäßen Verfahrens dargestellt. Dabei wird zunächst eine Innenform 1 errichtet. Im vorliegenden Beispiel handelt es sich bei der Innenform 1 um einen mit einem Fluid, vorzugsweise Luft 10 gefüllten ballonartige Körper in Form einer Kugelkalotte bzw. um eine unter Überdruck stehende pneumatisch gestützte Membran, beispielsweise aus einem, gegebenenfalls aus einzelnen Elementen zusammengenähten, PVC-Gewebe. Die Innenform 1 besteht im Wesentlichen aus einer rohmaterial- bzw. luftdichten, flexiblen Hülle und ist allseitig geschlossen bzw. zum Boden bzw. ihrer Auflagenfläche hin abgedichtet, bis auf eine Öffnung 4', an die eine Pumpe bzw. ein Gebläse 4 angeschlossen ist.

Auf diese Weise kann Luft in das Innere der Innenform 1 eingebracht werden und der gewünschte Innenüberdruck eingestellt werden. Der Innendruck liegt in etwa 5 bis 30 mbar über dem äußeren Umgebungsdruck und ist abhängig vom verwendeten Material und der gewählten Form. Durch die Vorsehung der Pumpe 4 kann, gegebenenfalls durch ständige Messung des Drucks, auch flexibel auf temperaturbedingte Volumens Änderungen reagiert werden, die nach Möglichkeit unterbleiben sollten, um ein gleichmäßiges Aushärten des Rohmaterials 2' zu gewährleisten. Die Einstellung des Drucks kann vorzugsweise automatisch über die Drehzahl des Gebläses bzw. Kompressors erfolgen, indem beispielsweise ein Differenzdruckmesser den Druckunterschied zwischen Innen und Außen misst und computerunterstützt den Drehzahlsteller des Gebläses bzw. Kompressors regelt. Diese Druckregelung ist auch bei der Herstellung des später erörterten Vakuums im Zwischenraum vorteilhaft, um eine gleichmäßige und spannungsrissfreie Aushärtung der Platte zu erreichen.

Die Förderleistung kann bei einem Innenüberdruck von 15 mbar z.B. 30.000 m³ pro Stunde betragen, dazu wird ein Gebläse mit etwa 15 kW Leistung benötigt.

Alternativ kann die Innenform 1 auch als biegesteife starre Konstruktion ausgestaltet sein. In der Regel bedarf es dabei dann keiner Anlegung eines Überdruckes.

Die nach außen gerichtete Außenfläche 1' der Innenform 1 gemäß Fig. 1 ist konvex, in jedem Punkt positiv gekrümmt und besitzt die Form einer Kugelkalotte. Die Innenform 1 ist im vorliegenden Fall ein einfacher Hohlkörper, frei von innenliegenden Stegen, Versteifungen oder Abspannungen.

Es ist an dieser Stelle möglich, auf die Außenfläche 1' eine Trennschicht 7 aufzubringen, im vorliegenden Beispiel ist dies jedoch nicht der Fall. Ist die Außenfläche 6 glatt genug, gibt es in der Regel auch keine Probleme mit der abschließenden Ablösung des Rohmaterials 2. Auch kann die Außenfläche 1' eine gewisse Oberflächenstruktur aufweisen oder vorstehende Lamellen od. dgl. für die Ausbildung von Ausnehmungen für Leitungen od. dgl. im Rohmaterial 2 besitzen, was im vorliegenden Beispiel jedoch ebenfalls nicht der Fall ist.

Die Trennschicht 7 oder auch die Innenform 1 können in den Randbereichen mit einer Schürze versehen sein.

Hat die Innenform 1 die gewünschte Form und Stabilität erreicht, so wird, wie aus Fig. 2 ersichtlich, begonnen, das Rohmaterial 2 von oben auf die Außenfläche 1' der Innenform 1 aufzubringen.

Das Rohmaterial 2 ist vorzugsweise ein Faserverbundmaterial aus Naturfasern, beispielsweise Strohfasern, und einem aushärtbaren Bindemittel, z.B. einem Polymer oder Leicht-Beton bzw. einem Faserbeton mit unterschiedlichen Faserlängen, welches als erste Schicht aufgetragen wird. Auf diese erste Schicht werden dann eine zweite oder mehrere Schichten des Rohcomposits aufgetragen.

Dieses Bindemittel sollte möglichst unter Luftabschluss bzw. verringertem Luftdruck aushärten. Das Bindemittel wird dem jeweils verwendeten Faserwerkstoff, der Verarbeitungstemperatur und der benötigten Abbindzeit angepasst. Im vorliegenden Beispiel besteht die gesamte Konstruktion aus biologisch abbaubarem Material und enthält keine persistenten Bestandteile, wie beispielsweise Metallteile.

Gemäß Fig. 2 wird das Rohmaterial 2 gleichförmig in einer Schicht über die gesamte Außenfläche 1' verteilt. Das Rohmaterial 2 hat dabei eine solche Zähigkeit bzw. Konsistenz, dass es von der gekrümmten Oberfläche der Innenform 1 nicht abrinnt und eine gleichförmige Dicke behält. Um ein Abrutschen des anfänglich noch weichen Rohmaterials 2 zu verhindern, kann die Außenfläche 1' auch eine Rippenstruktur aufweisen bzw. können stabilisierende Elemente wie Bewehrungen aus verschiedenen Materialien eingesetzt werden.

Alternativ kann die Aufbringung des Rohmaterials 2' auch nacheinander in mehreren dünneren Schichten erfolgen, wobei aus optischen Gründen die kürzesten Fasern an den Sichtseiten der später erhaltenen Schale oder Platte 20 liegen sollten und die längeren Fasern aus Stabilitätsgründen dazwischen.

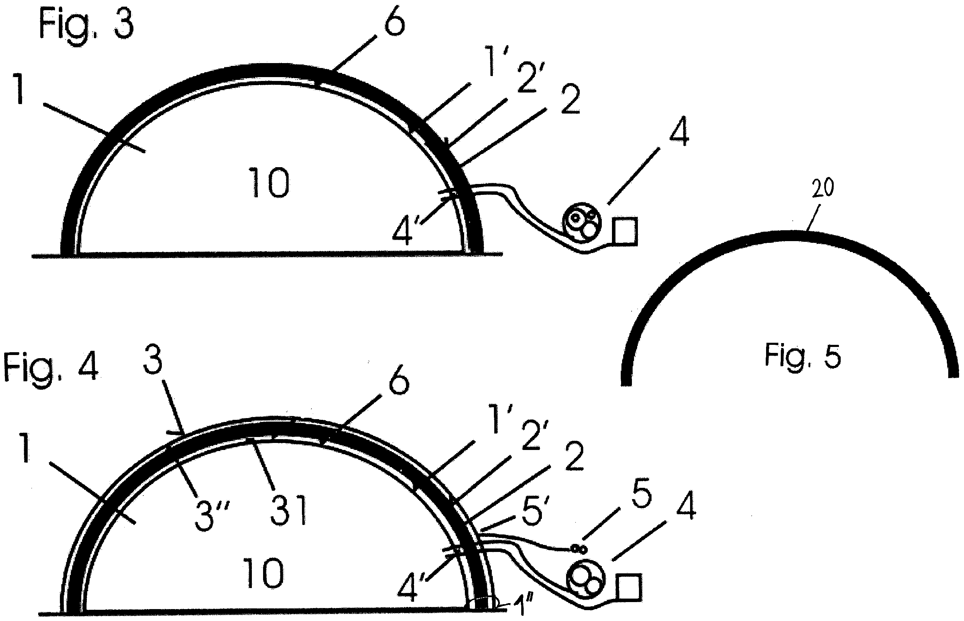

Gemäß Fig. 3 ist die Aufbringung des Rohmaterials 2 beendet und ist das Rohmaterial 2 über die gesamte sichtbare bzw. erhabene Fläche der Innenform 1 gleichförmig aufgetragen.

Als Außenfläche 1' der Innenform 1 wird - nicht nur beim vorliegenden Beispiel, sondern generell - verständlicherweise immer nur diejenige Fläche bezeichnet, auf die die Aufbringung des Rohmaterials 2 auch möglich ist. Insbesondere zählt die dem Boden zugewendete Stand- bzw. Auflagefläche der Innenform 1 nicht zur Außenfläche 1'.

In Fig. 3 wurde somit die gesamte Außenfläche 1' lückenlos mit Rohmaterial 2 bedeckt, alternativ ist es jedoch auch möglich, nur Teilbereiche derselben zu beaufschlagen.

In diesem Stadium wäre es möglich, in das Rohmaterial 2' Verrohrungen, Leitungen, Aussparungen oder auch Verstärkungs- und Versteifungselemente od. dgl. einzubringen. Die exemplarische Konstruktion gemäß den Fig. 1 bis 5 besteht jedoch nur aus dem Rohmaterial 2.

In Fig. 4 ist der nächstfolgende Schritt des Verfahrens dargestellt. Hierbei wird eine gas- bzw. luftdichte Außenhülle 3 über die gesamte Außenfläche 1' bzw. die gesamte Oberfläche 2' des noch nicht erstarrten Rohmaterials 2 gelegt. Im vorliegenden Fall handelt es sich bei der Außenhülle 3 um eine flexible Plane aus PVC. Diese liegt berührend, aber durchaus mit einigen Falten und geringen Abständen an der Oberfläche des Rohmaterials 2 an.

Sowohl die Innenform 1, allfällige Trennfolien bzw. Trennschichten 7 und auch die Außenhülle 3 können einen der endgültigen Form der Platte 2 entsprechenden Zuschnitt aufweisen, um die Faltenbildung zu verringern bzw. um strukturgebende, vorzugsweise einschnürende, Wirkung zu erfüllen, um beispielsweise das geordnete Ablaufen von Regenwasser oder die Applikation von nachträglich aufgebrachten Formteilen, z.B. für das nächstfolgende Stockwerk bzw. Gebäude, zu erleichtern oder überhaupt zu ermöglichen.

Zwischen der Außenhülle 3 und der Innenform 1 bzw. der Oberfläche 2' des Rohmaterials 2 wird dadurch ein evakuierbarer Zwischenraum 31 ausgebildet. Die Dichtheit wird dadurch gewährleistet, dass im unteren Bereich des Umfanges die Außenhülle 3 und die Innenform 1 abgedichtet werden und dass sowohl die Außenhülle 3 als auch die Innenform 1 zumindest nahezu luftdicht sind. Die Trennschicht 7 oder die Innenform 1 können in ihren Randbereichen mit einer Schürze versehen sein, die eine luftdichte Verbindung mit der Außenhülle 3 ermöglicht. Mittels Vakuumpumpe 5 wird der Zwischenraum 31 über eine Saugöffnung 5' evakuiert, insbesondere auf einen absoluten Druck von etwa 0,4 bar. Die flexible Außenhülle 3 legt sich dadurch noch enger und dichter an das Rohmaterial 2 an bzw. drückt der Umgebungsdruck allseitig und gleichförmig auf die Außenhülle 3. Dadurch kommt es zur Entfernung bzw. Verringerung von Luftblasen und Lufteinschlüssen aus dem Rohmaterial 2, zur gewünschten Vergleichmäßigung des Rohmaterials 2 sowie zur gleichmäßigen Kompaktierung bzw. Verfestigung des Rohmaterials 2.

Die in den Fig. 3 und 4 dargestellten Abstände zwischen dem Rohmaterial 2' und der Außenfläche 6 der Innenform 1 bzw. zwischen dem Rohmaterial 2 und der Innenfläche 3" der Außenhülle 3 sind im vorliegenden Beispiel tatsächlich nicht vorhanden
bzw. gezeigt und dienen nur der klareren Darstellung der einzelnen Schichten in den schematischen Zeichnungen.

Nach Abschluss der Evakuierung des Zwischenraums 31 wird das Vakuum in der Regel noch für eine gewisse Zeit, insbesondere bis zur vollständigen Aushärtung des Bindemittels des Rohmaterials 2, beibehalten, kann jedoch nach und nach wieder verringert werden. Das Rohmaterial 2 wird dann verfestigt bzw. aushärten gelassen. Entsteht dabei Wärme, sollte auf Verformungen der Innenform 1 geachtet werden.

Nach dem Aushärten des Rohmaterials 2 ist die Platte bzw. Schale 2 an sich fertig und werden gemäß Fig. 5 die Innenform 1 und die Außenhülle 3 wieder entfernt. Alternativ kann die Außenhülle 3 auch auf der Oberfläche der erhärteten Schale 20 verbleiben.

Die erfindungsgemäß *erhältliche* Platte 20 kann in dieser Form als attraktives verschalungselement für Fassaden, als Car-Ports, Liegen etc. eingesetzt werden, oder in wesentlich größerer Dimensionierung als igluartige oder tunnelartige Kuppelbauten, beispielsweise für schnell zu errichtende Notunterkünfte in Krisengebieten. Entsprechende Fenster- oder Türöffnungen bzw. Kanäle für Verrohrungen oder Leitungen können dabei, wie erwähnt, bereits während der Herstellungsphase eingebaut werden oder erst im Endprodukt eingearbeitet werden.

Ein weiteres vorteilhaftes, nicht einschränkend zu verstehendes Ausführungsbeispiel für die Herstellung eines Dachsegments wird wie folgt beschrieben:
Anhand computerunterstützter Modellierung und statischer Berechnung wird eine dreidimensionale Darstellung des gewünschten Dachsegments entwickelt. Mit Hilfe geeigneter Abwicklungsprogramme wird die entsprechende Innenform 1 aus z.B. einem PVC-Planenmaterial ausgeschnitten, zusammengenäht und mit allenfalls notwendigen innenliegenden Abspannungen und Verstärkungen versehen.

Auf der Baustelle wird diese Innenform 1 aufgeblasen und mit dem notwendigen Betriebsüberdruck versehen. Auf der Innenform 1 sind bereits Markierungen von Randbereichen oder anderen besonderen Zonen angebracht. Abspannungen zum Boden verhindern eine zu große Auswölbung des Bodens.

Die Innenform 1 wird gegebenenfalls mit einer Trennschicht 7 aus dünner PE-Folie versehen, um eine leichte Entformung zu gewährleisten. Als kraftaufnehmende Elemente wird gerippter Baustahl verwendet, der in die auszufüllende Form hineinragt oder mit Kranhaken versehen hindurchragt und gebäudeseitig in eine stabile Bodenplatte mit Bohrungen für eine Verschraubung mündet. Die noch etwas flexible Innenform 1 wird so ausgerichtet, dass nach der Fertigstellung die gewölbte Dachform passgenau festgeschraubt werden kann.

Nun wird die Außenfläche 1' der Innenform 1 mit dem Rohmaterial 2 und zwar einem Gemisch aus Strohfasern und einem entsprechenden Bindemittel bedeckt. Dabei treibt ein Traktor eine Strohmühle und einen Ballenauflöser an, die von zwei Arbeitern gleichmäßig mit Strohhalmen beschickt wird. Das entsprechende Sieb sorgt für eine Faserlänge von etwa 10 - 20 mm für die erste Schicht. Dabei wird das Stroh-Luft Gemisch über einen flexiblen Schlauch mit ca. 200 mm D von der Strohmühle direkt zur Stelle des Auftrags mittels eines Fördergebläses transportiert. Am Schlauchende sind Düsen montiert, die das mit Druck über einen weiteren Schlauch mit etwa 15 mm Wassersäule herangeführte und bereits mit Härter versetzte Bindemittel in den Luftstrom einbringt und dabei eine gleichmäßige Vermischung ermöglicht.

Nach dem Aufbringen einer ersten Schicht in den vorgesehenen Bereichen wird die Siebgröße auf eine Faserlänge von 50 bis 80 mm verändert und die weitere Schicht nass-in-nass aufgebracht. Dabei schwenken die Arbeiter den Schlauch mit regelmäßigen Bewegungen. Für Bereiche, die nicht vom Boden oder vom Gerüst aus erreicht werden können, wird ein Steiger eingesetzt. Im Bereich der mechanischen Verstärkungen wird das noch plastische Material mit der Hand manuell eingearbeitet, um eine gute Verbindung zu erhalten.

Abschließend wird wiederum eine feinfasrige Deckschicht aufgebracht. Diese Deckschicht kann auch Farbpigmente oder andere Stoffe zur Gestaltung verschiedener Oberflächen beinhalten.

Anschließend wird die Außenhülle 3 in Form einer z.B. mit einem Firmenlogo bedruckten PVC Folie über das Konstrukt gezogen bzw. auf das Rohmaterial 2 aufgelegt und an Referenzpunkten fixiert. Dadurch ist die richtige Ausrichtung und Perspektive sichergestellt.

Nun wird ein flexibler gelochter Schlauch ringförmig um das Konstrukt gelegt und an die Vakuumpumpe 5 angeschlossen. Die Abdichtung des zu evakuierenden Zwischenraums 31 erfolgt durch mehrfaches Umknicken und Verkleben der Innen- und Außenfolien.

Die Vakuumpumpe 5 legt nun einen absoluten Druck von z.B. 0,3 bar an. Dadurch wird das Fasergemisch zusammengepresst und eine hohe Festigkeit erreicht bzw. die Festigkeit erhöht.

Nach etwa einem Tag hat das Bindemittel abgebunden und die Innenform 1 kann entfernt bzw. nach unten abgezogen werden. Nun können auch an der gebildeten Gebäudehülle 20 selbst noch Details mit verschiedenen Werkzeugen nachgearbeitet werden.

Nach Fertigstellung dieses Finetunings, wird das Konstrukt an den vorbereiteten Kranhaken aufgenommen und bestimmungsgemäß, z.B. als extravagant freigeformtes Dach eines Bürogebäudes, eingebaut.

Erfindungsgemäß ist die Produktion und Herstellung von zweidimensional gekrümmten auch großformatigen Platten, Bauteilen und Formelementen, wie z.B. Überdachungen, Pavillons, Messeständen, Einrichtungsgegenständen, Fassadengestaltungen, Hallen und Notunterkünften möglich.

Eine weitere beispielhafte Anwendung liegt in der Nutzung als einfach aufzuspritzender Dämmstoff, sowohl im Innen- und Außenbereich.

Realisiert werden können auch verschiedenste Designmöbel, Werbeobjekte und Wohnlandschaften in unterschiedlichsten Größen. Weiterhin können auch, z.B. temporär verbleibende, Stadtmöbel, Theken und Pavillons in unterschiedlichster Größe und Ausprägung hergestellt werden.

Grundsätzlich erlaubt die neue Technologie auch eine Begrünung des Produkts - teilweise oder zur Gänze. Vorteilhaft erscheint hier eine Vermischung der äußeren Schichten des Composits mit Samen und Düngemittel. Ebenso könnten auch Behältnisse, z.B. Container, Säcke, mit bewurzeltem Pflanzenmaterial und Nährboden in die äußerste Schicht mit eingebracht werden.

Weitere Anwendungen liegen im Schalungsbau, es kann aber z.B. auch eine Hangsicherung realisiert werden.

Die folgende Beispiels-Tabelle gibt bevorzugte Mengenverhältnisse der Hauptkomponenten der Bindemittel/Faser-Gemische gemäß der Erfindung wieder:

| Faser | Faserlänge mm | Bindemittel | Verhältnis [Gew-%] Fasern/ Bindemittel | Trockensubstanz Bindemittel [%] |
|---|---|---|---|---|
| Weizenstroh | 30-80 | Magnesiumligninsulfonate | 50/50 | 55 |
| Kenaf | 20-50 | Kalk-Caseinleim | 45/55 | 33 |
| Hanf | 20-40 | Natronwasserglas | 40/60 | 36 |
| Flachs | 15-40 | 1k PUR | 60/40 | 100 |
| Fichtenholz | 20-50 | PVAc | 65/35 | 60 |
| Glasfasern | 20-30 | Polyesterharz | 70/30 | |
| Kohlefasern | 20-30 | 2k PUR | 75/25 | 98 |
| Jute | 30-50 | Stärke | 55/45 | 30 |
| Kiefernholz | 20-50 | Zement | 70/30 | 70 |
| Fasernessel | 10-50 | Methylzelluloseester | 40/60 | 10 |
| Roggenstroh | 30-80 | 2k EPI | 70/30 | 40 |
| Zellulose | 10-70 | Dextrin | 50/50 | 38 |
| Schafwolle | 30-60 | Casein-Leim | 35/65 | 55 |

## Patentansprüche

1. Verfahren zur Herstellung von einfach oder zweifach gekrümmte, insbesondere zylinder- und/oder kuppelartig gekrümmte und/oder gewölbte und/oder freie Gestalt aufweisenden platten- und/oder schalenartigen Bauteilen, wobei ein im Wesentlichen schlammartig pastöse Konsistenz aufweisendes aushärtbares Rohmaterial auf Basis eines Gemisches zumindest eines Bindemittels mit faserartigen Bestandteilen auf eine der jeweiligen Gestalt der Bauteile entsprechend ausgebildete Außenfläche einer Innenform aus einem zumindest von dem genannten Rohmaterial im Wesentlichen nicht durchdringbaren Material aufgebracht und dort aushärten gelassen wird,
**dadurch gekennzeichnet,**
- **dass** auf die gesamte Außenfläche (1') der Innenform (1) oder zumindest auf Teilbereiche derselben als Rohmaterial ein - im getrockneten Zustand eine Dichte von weniger als 1,2 t/m³ aufweisendes - Gemisch (2) eines Bindemittels mit zumindest 35 Gew-% Fasern und/oder faserhaltigen Partikeln, jeweils bezogen auf das Gesamt-Gemisch, aufgebracht wird,
- **dass** auf die gesamte Außenfläche (2') des aufgebrachten Lufteinschlüsse und Luftblasen aufweisenden, offenporigen oder öffenzelligen Bindemittel/Faser- bzw. Rohmaterial-Gemisches (2) oder zumindest auf Teilbereiche derselben, flächig berührend bzw. anliegend, eine fluid- bzw. gasdichte Außenhülle (3) oder Außenfolie, aufgebracht wird,
- **dass** die genannte Außenhülle (3) an die Außenfläche (1') der Innenform (1) oder an die Innenform (1) jeweils an deren Rand (1") im Wesentlichen fluid- bzw. gasdicht angeschlossen wird und
- **dass** über zumindest eine mit dem Zwischenraum (31) zwischen der Außenhülle (3) und der Außenfläche (1', 2') der Innenform (1) bzw. des auf diese Außenfläche (1') aufgebrachten Bindemittel/Faser- bzw. Rohmaterial-Gemischs (2) in Verbindung stehende Sauganschlussstelle *(5')* in dem genannten Zwischenraum (31) ein Absolut- Druck von weniger als 0,7bar erzeugt wird,
- bis das Bindemittel/Faser-Gemisch bzw. Rohmaterial (2) zumindest im Bereich seiner Außenfläche (2'). überwiegend formstabil und selbsttragefähig begonnen hat auszuhärten,
- wonach das so erhaltene Bauteil (20) und zumindest die Innenform (1) voneinander getrennt werden oder aber nicht.

2. Verfahren nach Anspruch 1, **dadurch gekennzeichnet, dass** ein Rohmaterial eingesetzt wird, das im trockenen Zustand eine Dichte von weniger als 0,9 t/m3 aufweisendes Gemisches eines Bindemittels mit mindestens 40 Gew.-% Fasern und/oder faserhaltigen Partikeln, jeweils bezogen auf das Gesamt-Gemisch ist und/oder dass in dem Zwischenraum (31) ein Absolut-Druck von weniger als 0,15 bar erzeugt wird, und/oder dass die Wärmeleitfähigkeit λ der ausgetrockneten Platte oder Schale (20) kleiner als 0,1 W/mK ist.

3. Verfahren nach Anspruch 1, **dadurch gekennzeichnet, dass** ein Rohmaterial (2) eingesetzt wird, dessen Fasern zumindest teilweise Fasern biogenen Ursprungs sind, und/oder dass ein Rohmaterial (2) eingesetzt wird, dessen Bindemittel biogenen Ursprungs ist, und/oder dass in dem Rohmaterial Fasern mit einer Faserlänge im Bereich bis 80 mm, vorzugsweise von 20 bis 50 mm, eingesetzt werden.

4. Verfahren nach einem der Ansprüche 1 bis 3. **dadurch gekennzeichnet, dass** vor dem Aufbringen des Rohmaterials (2) auf die Innenform (1) oder vor der Aushärtung des Rohrmaterials (2) und vor der Aufbringung der Außenhülle (3) in das auf die Innenform (1) aufgebrachte Rohmaterial (2) elektrische, hydraulische und/oder Daten-Leitungen, Rohre, Schläuche, Leerrohre, Aussparungselemente und/oder Verstärkungs- oder Versteifungselemente, wie Bänder, Drähte oder Seile, Verbindungs-, Kraftaufnahme- oder Dämmelemente eingebracht und mit-ausgehärtet werden.

5. Verfahren nach einem der Ansprüche 1 bis 4, **dadurch gekennzeichnet, dass** eine Innenform (1) mit einer Außenfläche (1') eingesetzt wird, welche in jedem Punkt nach außen hin konvex gekrümmt ausgebildet ist und/oder bei welcher Teilbereiche der genannten Außenfläche (1') nach außen hin konkave Krümmung besitzen.

6. Verfahren nach einem der Ansprüche 1 bis 5, **dadurch gekennzeichnet, dass** als Innenform (1) ein mit einer pneumatisch gestützten oder vorgespannten oder durch Überdruck stabilisierten Folie oder Membran gebildeter flexibler, volumens-veränderlicher Hohlkörper, der durch Einbringung eines Gas- oder Fluid-Mediums (10) seine Steifigkeit erhält, ausgebildet wird, wobei im Inneren dieser Innenform (1) ein, gegebenenfalls veränderbarer, Innen-Überdruck von mindestens 7 mbar, vorzugsweise von zumindest 15 mbar, aufrecht erhalten wird, und/oder dass eine Innenform (1) eingesetzt wird, welche als verschiebbarer oder nicht verschiebbarer einheitlicher, starrer und biegesteifer Körper ausgebildet ist oder aber zerlegbar aus einer Mehrzahl von, gegebenenfalls auch zueinander identisch geformten, Innenform-Modulen zusammengesetzt ist.

7. Verfahren nach einem der Ansprüche 1 bis 6, **dadurch gekennzeichnet, dass** auf der Außenfläche (1') der Innenform (1) eine, vorzugsweise luftdichte, Trennschicht (7) oder eine Anti-Haft-Beschichtung, beispielsweise aus Polyethylen oder Polyfluorethylen aufgebracht wird, und/oder dass eine Innenform (1) eingesetzt wird, deren Außenfläche (1') und/oder deren Trennschicht (7) mit einer Oberflächenstruktur, mit einem erhabenen Muster oder mit Entformungsrippen versehen ist.

8. Verfahren nach einem der Ansprüche 1 bis 7, **dadurch gekennzeichnet, dass** als Außenhülle (3) eine flexible, gegebenenfalls elastische, Plane eingesetzt wird, oder aber eine starre und biegungssteife Form, welche jeweils die im Wesentlichen gleiche Krümmung wie die Außenfläche (1') der Innenform (1) aufweist, wobei es bevorzugt ist, wenn die Innenfläche (3") der Außenhülle (3) und die Außenfläche (1') der Innenform (1) zueinander parallel ausgerichtet werden bzw. sind

9. Verfahren nach einem der Ansprüche 1 bis 8, **dadurch gekennzeichnet,**
- **dass** die Fasern mit dem Bindemittel des auf die Innenform (1) aufzubringenden Rohmaterials (2) erst unmittelbar vor dem Kontakt mit der Außenfläche (1') der Innenform (1) miteinander gemischt werden und
- **dass** das auf diese Weise erhaltene Rohmaterial (2) auf die genannte Außenfläche (1') der Innenform (1) aufgespritzt bzw. aufgesprüht wird, und/oder dass die Aufbringung bzw. Aufspritzung des Rohmaterials (2) in mehreren Schichten erfolgt, wobei es bevorzugt ist, wenn die jeweils weiter außen liegenden Schichten kürzere Biogan-Fasern enthalten und die weiter innen liegenden Schichten längere Biogen-Fasern, oder aber, dass die Aufbringung bzw. Aufspritzung des Rohmaterials (2) in nur einer Schicht erfolgt, wobei im Außenbereich kürzere Fasern liegen und die weiter innen liegenden Fasern vergleichsweise länger sind.

10. Verfahren nach einem der Ansprüche 1 bis 9, **dadurch gekennzeichnet, dass** die Außenhülle (3) nach dem Aushärten des Rohmaterials (2) bzw. auf der ausgehärteten Platte oder Schale (20) in ihrer Position auf demselben bzw. derselben mit ihm bzw. ihr verbunden belassen wird, und/oder dass zumindest Teilbereiche der Innenfläche (3") der Außenhülle (3) vor dem Auflegen derselben auf die Rohmaterial(2)-Schicht bzw. auf die Trennschicht (7) mit einem Klebe- oder Haftmittel benetzt werden, und/oder
- dass zwischen Außenhülle (3) und der Außenfläche (2') des aufgebrachten Rohmaterials (2) eine gas- bzw. fluid-permeable Materialschicht angeordnet wird.

11. Verfahren nach einem der Ansprüche 1 bis 10, **dadurch gekennzeichnet, dass** für das Rohmaterial (2) als Bindemittel Ligninsulfonate, (Kalk-)Kaseinleim, Wasserglas, Polymere, wie z.B. Polyurethane, Polyester, Polyvinylacetat, Methylzelluloseester. Stärken und/oder Dextrine eingesetzt werden und als Biogen-Fasern, z.B. Weizen- und Roggenstroh, Kenaf, Hanf, Flachs, Fichten-, Kiefernholz-, Kohlefasern, Jute, Fasernessel-, Zellulose- und/oder Wollfasern eingesetzt werden.

12. Verfahren nach einem der Ansprüche 1 bis 11, **dadurch gekennzeichnet, dass** eine Innenform (1) eingesetzt wird, welche über eine wiederverschließbare Öffnung verfügt, welche es einer Person ermöglicht, diese Innenform (1) zu betreten.

## Claims

1. Method for producing plate- and/or shell-like components which have a singly or doubly curved, in particular cylindrically and/or dome-like curved and/or arched and/or free shape, wherein a curable raw material which has a substantially slurry-like pasty consistency and is based on a mixture of at least one binder comprising fibrous components is applied to an outer surface of an inner mould made of a material which is substantially impenetrable to at least said raw material, said outer surface designed corresponding to the shape of the components, and is left to cure there, **characterised in that**
- a mixture (2) of a binder comprising at least 35 wt.% of fibres and/or fibre-containing particles, based in each case on the mixture as a whole, said mixture comprising a density of less than 1.2 t/m³ in the dried state, is applied as a raw material to the entire outer surface (1') of the inner mould (1) or at least to sub-regions- of same,
- that a fluid-tight or gas-tight outer shell (3) or outer film is applied to the entire outer surface (2') of the open-pore or open-cell binder/fibre and raw material mixture (2) comprising air inclusions and air bubbles or at least to sub-regions of same so as to have planar contact with or rest in a planar manner on said outer surface,
- that said outer shell (3) is connected to the outer surface (1') of the inner mould (1) or to the inner mould (1) in each case on the edge (1") thereof in a substantially fluid-tight or gas-tight manner, and
- that an absolute pressure of less than 0.7 bar is produced in an intermediate space (31) via at least one suction connection point (5') connected to said intermediate space (31) between the outer shell (3) and the outer surface (1', 2') of the inner mould (1) or of the binder/fibre and raw material mixture (2) applied to said outer surface (1'),
- until the binder/fibre mixture or raw material (2) has begun to cure in a predominantly dimensionally stable and self-supporting manner at least in the region of the outer surface (2') thereof,
- after which the resulting component (20) and at least the inner mould (1) are separated from each other or not.

2. A method according to claim 1,
**characterised in that** a raw material is used, which comprises a mixture - having, in the dried state, a density of less than 0.9 t/m³- of a binder having at least 40 wt.% of fibres and/or fibrous particles, based in each case on the mixture as a whole, and/or that in the intermediate space (31) an absolute pressure of less than 0.15 bar is produced, and/or that the thermal conductivity λ of the cured plate or shell (20) is less than 0.1 W/mK.

3. A method according to claim 1, **characterised in that** a raw material (2) is used in which the fibres thereof are at least partially fibres of biogenic origin, and/or a raw material (2) is used in which the binder thereof is of biogenic origin, and/or that fibres comprising a fibre length in the range up to 80 mm, preferably from 20 to 50 mm, are used in the raw material.

4. A method according to any one of claims 1 to 3, **characterised in that** before the applying of the raw material (2) to the inner mould (1) or before the curing of the raw material (2) and before the applying of the outer shell (3) electrical, hydraulic and/or data lines, pipes, hoses, empty pipes, recess elements and/or reinforcing or stiffening elements such as bands, wires or cables, connecting elements, force-receiving elements or damping elements are introduced into the raw material (2) applied to the inner mould (1) and cured with same.

5. A method according to any one of the claims 1 to 4, **characterised in that** an inner mould (1) comprising an outer surface (1') is used, which is designed at each point in an outwardly convexly curved manner and/or in which sub-regions of said outer surface (1') have outwardly concave curvature.

6. A method according to any one of claims 1 to 5, **characterised in that** a flexible volume-variable hollow body which is formed with film or membrane which is pneumatically based or prestressed or stabilised by overpressure is formed as the inner mould (1), said hollow body obtaining the rigidity thereof by the introduction of a gas or fluid medium (10), wherein in the inside of said inner mould (1) an optionally variable inner overpressure of at least 7 mbar, preferably of at least 15 mbar, is maintained, and/or that an inner mould (1) is used which is designed as a displaceable or non-displaceable uniform rigid and flexurally rigid body or is composed from a plurality of inner mould modules, such that same can be dismantled, which are moulded also optionally identical to each other.

7. A method according to any one of claims 1 to 6, **characterised in that** a, preferably air-tight, separating layer (7) or an anti-adhesive coating, for example made from polyethylene or polyfluorethylene, is applied to the outer surface (1') of the inner mould (1) and/or that an inner mould (1) is used, the outer surface (1') of which and/or separating layer (7) comprising a surface structure of which is provided with a raised pattern or with demoulding ribs.

8. A method according to any one of the claims 1 to 7, **characterised in that** optionally elastic tarpaulin is used as the outer shell (3) or a rigid and flexurally rigid shape, which in each case has the substantially same curvature as the outer surface (1') of the inner mould (1), wherein it is preferred if the inner surface (3") of the outer shell (3) and the outer surface (1') of the inner mould (1) are oriented parallel with respect to each other.

9. A method according to any one of claims 1 to 8, **characterised in that**
the fibres with the binder of the raw material (2) to be applied to the inner mould (1) are mixed with each other only immediately before contact with the outer surface (1') of the inner mould (1), and
that the raw material (2) obtained in this way is sprayed onto said outer surface (1') of the inner mould (1), and/or that the applying or spraying of the raw material (2) occurs in a plurality of layers, wherein it is preferred if the layers further to the outside contain shorter biogenic fibres and the layers further to the inside contain longer biogenic fibres, or that the raw material (2) is applied or sprayed in only one layer, wherein shorter fibres lie in the outer region and the fibres further to the inside are comparatively longer.

10. A method according to any one of claims 1 to 9, **characterised in that** the outer shell (3) after curing of the raw material (2) and on the cured plate or shell (20) is left bonded with same on the position thereof on same, and/or that at least sub-regions of the inner surface (3") of the outer shell (3) are wetted with a glue or adhesive before same are applied to the raw material (2) layer or to the separating layer (7), and/or
that a gas- or fluid-permeable material layer is arranged between the outer shell (3) and the outer surface (2') of the applied raw material (2).

11. A method according to any one of claims 1 to 10, **characterised in that** lignin sulphonates, (lime) casein glue, water glass and polymers such as polyurethanes, polyesters, polyvinyl acetates, methyl cellulose esters, starches and/or dextrins are used as binder for the raw material (2) and, for example, wheat, rye straw, kenaf, hemp, flax, spruce wood, pine wood, carbon fibres, jute, fibre nettle fibres, cellulose fibres and/or wool fibres are used as biogenic fibres.

12. A method according to any of claims 1 to 11, **characterised in that** an inner mould (1) is used which has a recloseable opening that allows a person to enter said inner mould (1).

## Revendications

1. Procédé de fabrication d'éléments structuraux à double ou simple courbure, en particulier à courbure en forme de cylindre et/ou de coupole et/ou bombés et/ou en forme de coque et/ou de plaque présentant une forme libre,
une matière première durcissable présentant une consistance pâteuse sensiblement boueuse à base d'un mélange d'au moins un liant comprenant des constituants fibreux étant appliquée sur une surface externe conçue de manière correspondante à la forme respective des éléments structuraux d'un moule intérieur constitué d'une matière sensiblement non perméable à ladite matière première et que l'on y laisse durcir, **caractérisé**
- **en ce qu'**on applique sur l'ensemble de la surface externe (1') du moule intérieur (1) ou au moins dans certains endroits de celui-ci en tant que matière première, un mélange (2) - présentant une épaisseur inférieure à 1,2 t/m³ à l'état sec - d'un liant comprenant au moins 35 % en poids de fibres et/ou de particules fibreuses, respectivement sur la base du mélange total,
- **en ce que** sur l'ensemble de la surface extérieure (2') du mélange (2) appliqué de matière première ou de liant/fibres à cellules ouvertes ou poreuse, présentant des bulles d'air ou des poches d'air ou au moins dans certains endroits de celle-ci, repose ou est en contact à plat une enveloppe extérieure (3) ou un film extérieur étanche au gaz ou au liquide,
- **en ce que** ladite enveloppe extérieure (3) est située de manière sensiblement étanche au gaz ou au liquide dans le prolongement de la surface extérieure (1') du moule intérieur (1) ou du moule intérieur (1) sur son bord respectif (1") et
- **en ce qu'**au moyen d'au moins un point de raccord d'aspiration (5') se trouvant en communication avec l'espace intermédiaire (31) entre l'enveloppe extérieure (3) et la surface extérieure (1', 2') du moule intérieur (1) ou du mélange (2) de matière première ou de liant/fibres appliqué sur ladite surface extérieure (1') se produit dans l'espace intermédiaire mentionné (31) une pression absolue inférieure à 0,7 bar,
- jusqu'à ce que le mélange de liant/fibres ou de matière première (2) a commencé à durcir au moins dans la zone de sa surface extérieure (2'), pour être principalement indéformable et capable d'assurer son propre support,
- de ce fait l'élément structural (20) ainsi obtenu et au moins le moule intérieur (1) sont séparés ou non l'un de l'autre.

2. Procédé selon la revendication 1,
**caractérisé en ce qu'**on utilise une matière première qui est un mélange présentant une épaisseur inférieure à 0.9 t/m³ à l'état sec, d'un liant comprenant au moins 40 % en poids de fibres et/ou de particules fibreuses, respectivement sur la base du mélange total et/ou **en ce que** dans l'espace intermédiaire (31) se produit une pression absolue inférieure à 0,15 bar, et/ou **en ce que** la conductivité thermique λ de la plaque ou de la coque sèche (20) est inférieure à 0,1 W/mK.

3. Procédé selon la revendication 1, **caractérisé en ce qu'**on utilise une matière première (2) dont les fibres sont au moins en partie des fibres d'origine biogène et/ou **en ce qu'**on utilise une matière première (2) dont le liant est d'origine biogène et/ou **en ce que** dans la matière première sont utilisées des fibres ayant une longueur de fibre jusqu'à 80 mm, de préférence comprise entre 20 et 50 mm.

4. Procédé selon l'une quelconque des revendications 1 à 3, **caractérisé en ce qu'**avant l'application de la matière première (2) sur le moule intérieur (1) ou avant le durcissement de la matière première (2) et avant l'application de l'enveloppe extérieure (3) sont introduits et durcis conjointement dans la matière première (2) appliquée sur le moule intérieure (1), des lignes électriques, hydrauliques et/ou de données, des tubes, des tuyaux, des tubes vides, des éléments d'évidement et/ou des éléments raidisseurs ou de renfort tels que des bandes, des fils ou des câbles, des éléments de liaison, de prise de force ou isolants.

5. Procédé selon l'une des revendications 1 à 4, **caractérisé en ce qu'**on utilise un moule intérieur (1) ayant une surface extérieure (1') qui présente une courbure convexe vers l'extérieur au niveau de chaque point et/ou dans laquelle certains endroits de ladite surface extérieure (1') présentent une courbure concave vers l'extérieur.

6. Procédé selon l'une des revendications 1 à 5 **caractérisé en ce qu'**il est conçu en tant que moule intérieur (1) un corps creux de volume variable, souple formé d'une membrane ou d'un film stabilisé par surpression ou précontraint(e) ou pneumatique, qui obtient sa rigidité par l'introduction d'un milieu liquide ou gazeux (10), à l'intérieur dudit moule intérieur (1), étant maintenue une surpression interne, éventuellement modifiable, d'au moins 7 mbar, de préférence d'au moins 15 mbar et/ou **en ce qu'**on utilise un moule intérieur (1) qui est composé en tant que corps rigide à la flexion, rigide, homogène, coulissant ou non coulissant ou pouvant être divisible en une pluralité de modules de moule intérieur ayant éventuellement également la même forme.

7. Procédé selon l'une des revendications 1 à 6, **caractérisé en ce que** la surface extérieure (1') du moule intérieur (1) est pourvue d'une couche de séparation (7) de préférence étanche à l'air ou d'un revêtement antiadhésif, par exemple constitué(e) de polyéthylène ou de polyfluoroéthylène et/ou en ce qu"on utilise un moule intérieur (1) dont la surface extérieure (1') et/ou sa couche de séparation (7) est pourvue d'une structure de surface, d'un motif en relief ou de nervures de démoulage.

8. Procédé selon l'une des revendications 1 à 7, **caractérisé en ce qu'**on utilise en tant qu'enveloppe extérieure (3) une bâche souple éventuellement élastique ou un moule rigide à la flexion et rigide qui présente respectivement la courbure sensiblement identique à celle de la surface extérieure (1') du moule intérieur (1), de préférence lorsque la surface intérieure (3") de l'enveloppe extérieure (3) et la surface extérieure (1') du moule intérieur (1) sont ou seront parallèles entre elles.

9. Procédé selon l'une des revendications précédentes 1 à 8, **caractérisé**
- **en ce que** les fibres sont mélangées ensemble au liant de la matière première (2) à appliquer sur le moule intérieur (1) juste avant le contact avec la surface extérieure (1') du moule intérieur et
- **en ce que** la matière première (2) ainsi obtenue est pulvérisée ou projetée sur ladite surface extérieure (1') du moule intérieur (1) et/ou l'application ou la pulvérisation de la matière première (2) s'effectue en plusieurs couches, de préférence, lorsque chacune des couches se trouvant plus à l'extérieur comportent des fibres biogènes plus courtes et que les couches se trouvant plus à l'intérieur comportent des fibres biogènes plus longues, ou en ce que l'application ou la pulvérisation de la matière première (2) s'effectue en une seule couche, des fibres plus courtes se trouvant dans la zone extérieure et les fibres se trouvant plus à l'intérieur étant comparativement plus longues.

10. Procédé selon l'une des revendications 1 à 9, **caractérisé en ce que** l'enveloppe extérieure (3) après le durcissement de la matière première (2) ou sur la plaque ou la coque durcie (20) demeure reliée à celui-ci ou à celle-ci dans sa position sur celui-ci ou sur celle-ci, et/ou **en ce qu'**au moins certains endroits de la surface intérieure (3") de l'enveloppe extérieure (3) avant la pose de cette dernière sur la couche de matière première (2) ou sur la couche de séparation (7) sont mouillés d'un adhésif ou de colle, et/ou
- **en ce qu'**entre l'enveloppe extérieure (3) et la surface extérieure (2') de la matière première (2) appliquée est disposée une couche de matière perméable au gaz ou au liquide.

11. Procédé selon l'une des revendications 1 à 10, **caractérisé en ce que** pour la matière première (2) est utilisé en tant que liant du ligninsulfonate, de la caséine à la chaux, du silicate alcalin, du polymère, par exemple du polyuréthane, du polyester, du polyacétate de vinyle, de l'éther de méthylcellulose, des amidons et/ou de la dextrine et en tant que fibres biogènes, par exemple de la paille de seigle et de blé, du kénaf, du chanvre, du lin, des fibres de bois de pin, de bois de sapin, de carbone, de la jute, des fibres de grande ortie, de cellulose et/ou de laine.

12. Procédé selon l'une des revendications 1 à 11, **caractérisé en ce qu'**on utilise un moule intérieur (1) qui dispose d'une ouverture refermable qui permet à une personne de pénétrer dans ledit moule intérieur (1).
